# EUROPEAN PATENT APPLICATION

(11) **EP 4 170 194 A1**
(43) Date of publication of application: **26.04.2023**
(21) Application number: 21204048.9
(22) Date of filing: 21.10.2021
(51) Int. Cl.: F16F 1/38, F16F 1/387, F16F 1/376, F16F 1/37, F16F 3/087, B60G 13/00, B60G 15/06, F16F 1/36

(54) **DAMPER INLAY FOR A VEHICLE AND A VEHICLE COMPRISING SAID DAMPER INLAY**

(71) Applicant: BASF Polyurethanes GmbH, 49448 Lemförde (DE)
(72) Inventor: HINDERING, Matthias, 49448 Lemförde (DE); ESCH, Moritz, 49448 Lemförde (DE)
(74) Representative: Eisenführ Speiser

(57) **Abstract**

The invention relates to a damper inlay (6, 106), in particular a hybrid top mount inlay (6, 106) for a vehicle, in particular a commercial vehicle, said damper inlay (6, 106) comprising a core element (8, 108), a radial damper (10, 110) for damping radial loads perpendicular to a longitudinal axis (12, 112) of the damper inlay (6, 106), said radial damper (10, 110) radially surrounding the core element (8, 108), wherein the core element (8, 108) and the radial damper (10, 110) comprise a centrally arranged through hole (14, 114), the through hole extending along the longitudinal axis (12, 112) of the damper inlay (6, 106).

According to the invention at least one of the core element (8, 108) or the radial damper (10, 110) comprise a variable radial thickness (16, 116) in a circumferential direction (18, 118) around the longitudinal axis (12, 112).

## Description

The invention relates to a damper inlay, in particular a hybrid top mount inlay for a vehicle, said damper inlay comprising a core element and a radial damper for damping radial loads perpendicular to a longitudinal axis of the damper inlay, said radial damper radially surrounding the core element, wherein the core element and radial damper comprise a centrally arranged through hole, the through hole extending along the longitudinal axis of the damper inlay.

Damper inlays of the aforementioned kind are commonly used in the commercial vehicle industry, where they act so as to allow the vibrations of respective swing masses to decay quickly and are potentially classified as safety-relevant products. In vehicles, the tire-wheel suspension determines the character of the vehicle in terms of driving dynamics and comfort through its suspension and damping tuning. Depending on the geometric design of the vehicle axle, damper units are connected to the wheel suspension, for example either at the upper end or at both ends, via an elastic mounting, wherein hybrid damper inlays comprising plastic and metal components are being used as damping elements.

To insert such damper inlays into their respective housing, damper inlays irregularly comprise an outer sleeve for achieving better mounting characteristics. While utilizing sleeves has been found to be beneficial for many applications, said sleeves increase the overall dimensions of the damper inlay and add manufacturing complexity, which also increases overall production costs.

As a consequence, it was an object of the invention to provide a damper inlay of the initially mentioned type which overcomes the aforementioned problems as much as possible. In particular, it was an object of the invention to provide an improved damper inlay that comprises less parts, is easier to manufacture and may be installed conveniently into the housing.

The invention attains the aforementioned object by suggesting a damper inlay according to claim 1. According to the invention, at least one of the core element or the radial damper comprise a variable radial thickness in a circumferential direction around the longitudinal axis. With the help of said variable radial thickness, in particular at the radial damper, no outer sleeve is required to insert or press the damper inlay into a top mount housing. Due to the variable radial thickness, the surface of the radial damper is precompressed only in part when inserted into the housing. The variable radial thickness furthermore ensures a tight fit when assembled into the housing. Furthermore, by varying the geometry of the core element and/or the radial damper, the stiffness of the damper inlay can be adjusted.

According to a preferred embodiment, sections of higher radial thickness alternate with sections of lower radial thickness in the circumferential direction. In this way, only the sections of higher radial thickness of the radial damper contact the respective housing and get precompressed when inserted into the housing. The sections of higher radial thickness ensure a tight fit in the housing. Furthermore, the sections of higher radial thickness provide an improved deformation capacity. The sections of higher radial thickness can flexibly deform radially and axially when large loads are applied to the damper inlay so that the damper inlay can move better within the housing. Preferably, the sections of higher radial thickness remain in contact with a constant portion of the housing while the inlay moves.

According to a preferred embodiment, the damper inlay comprises thickness transition sections between the sections of higher radial thickness and lower radial thickness. In this way, radial waves are established at the radial damper and/or the core element. Said design provides benefits with regard to manufacturing and allows for conveniently inserting the damper inlay into the housing, wherein the damper inlay is safely kept in place at the housing.

According to a preferred embodiment, the thickness transition sections provide a bent-free thickness transition. The term bent-free is to be understood that no abrupt changes in thickness take place at the thickness transition sections. Preferably, the thickness transition sections provide a steady thickness transition. With the help of this, loads within the outer contours of the core element are distributed uniformly, wherein installation properties of the damper inlay are improved.

Preferably, the sections of higher radial thickness comprise a convex outer contour. Providing the sections of higher radial thickness with a convex outer contour facilitates a convenient installation of the damper inlay into the housing.

Preferably, the sections of lower radial thickness comprise a concave outer contour. Again, said design facilitates a convenient mountability of the inlay into housing. According to yet another preferred embodiment, the core element and the radial damper comprise the variable radial thickness in the circumferential direction around the longitudinal axis, and wherein sections of the core element having a higher radial thickness correspond to sections of the radial damper having a lower radial thickness.

With the help of this design, the damping material thickness is maximized for those sections of the radial damper that contact the damper housing. In other words, in this way, a higher degree of compression of the radial damper is available for said sections compared to, for example, a circular outer geometry of the core element.

Preferably, the sections of the core element having a lower radial thickness correspond to sections of the radial damper having a higher radial thickness. In this way, in the sections of the core element having a lower radial thickness more deformability is created. In the sections of the core element having a higher radial thickness, the radial thickness of the damping material is correspondingly low so that a high surface pressure is avoided. Further, the stiffness of the damper inlay is increased for those sections that do not regularly get in touch with the housing since the radial height of the radial damper is reduced for these sections.

According to yet another preferred embodiment, the axial thickness of the sections of higher radial thickness tapers with increasing radial distance from the longitudinal axis. In this way, the tips of the sections of higher radial thickness can flex more easily since also the axial thickness of the sections of higher radial thickness is reduced with increasing radial distance from the longitudinal axis. This additionally facilitates a convenient assembly of the damper inlay into the housing.

According to yet another preferred embodiment, the radial damper is moulded around the core element. In this way, a separation of radial damper and core element is inhibited within radial damper and core element are easy to manufacture.

According to yet another preferred embodiment, the radial damper is made of compact polyurethane, in particular thermoplastic polyurethane (TPU) or rubber. These materials have been found to be beneficial to damp the radial loads applied to the damper inlay during operation. The axial damping elements made from volume compressible microcellular polyurethane can be moulded or injection moulded (depending on the material) to the radial damper. Radial dampers made of rubber must be vulcanized separately. The polyurethane materials can also be produced separately and assembled subsequently.

According to yet another preferred embodiment, the centrally arranged through hole comprises a groove extending along the axial direction. With the help of said groove, a rotation of the damper inlay, which may be unwanted for certain kinds of application, is inhibited.

According to yet another preferred embodiment, said radial damper comprises a first axial end face and a second axial end face, the second axial end face being opposite from the first axial end face, and a first and second axial damping element for damping axial loads, the first axial damping element being in contact with the first axial end face and the second axial damping element being in contact with the second axial end face. The axial damping elements are configured for taking the main axial loads. Said axial damping elements mainly define the axial stiffness of the overall damper inlay.

Preferably, the at least one first axial damping element or second axial damping element comprises or consists of microcellular polyurethane, in particular volume compressible microcellular polyurethane. A suitable material in this regard is for example Cellasto, a trademark of BASF. When inserted into the housing, the axial damping elements are pre-compressed. Therefore, they are always in contact with the housing and the core element.

Microcellular polyurethane elastomers which, in a preferred embodiment, have a density according to DIN 53420 of 200 kg/m3 to 1100 kg/m3, preferably 300 kg/m3 to 800 kg/m3, a tensile strength according to DIN 53571 of 2 N/mm2, preferably 2 N/mm2 to 8 N/mm2, an elongation according to DIN 53571 of 300%, preferably 300% to 700%, and a tear strength according to DIN 53515 of preferably 8 N/mm to 25 N/mm are particularly preferred.

The elastomers are preferably microcellular elastomers on the basis of polyisocyanate polyaddition products, preferably having cells with a diameter of 0.01 mm to 0.5 mm, particularly preferably 0.01 to 0.15 mm.

Elastomers on the basis of polyisocyanate polyaddition products and the production thereof are known in general and described numerously, for example in EP A 62 835, EP A 36 994, EP A 250 969, DE A 195 48 770 and DE A 195 48 771.

Production customarily takes place by reacting isocyanates with compounds which are reactive to isocyanates.

The elastomers on the basis of cellular polyisocyanate polyaddition products are customarily produced in a mold in which the reactive starting components are reacted with one another. Suitable molds here are generally customary molds, for example metal molds, which, on the basis of their shape, ensure the three dimensional shape according to the invention

The polyisocyanate polyaddition products can be produced according to generally known methods, for example by the following starting substances being used in a single or two stage process:
(a) isocyanate,
(b) compounds reactive to isocyanates,
(c) water and optionally
(d) catalysts,
(e) blowing agents and/or
(f) auxiliary and/or additional substances, for example polysiloxanes and/or fatty acid sulfonates.

The surface temperature of the inner wall of the mold is customarily 40°C to 95°C, preferably 50°C to 90°C. The production of the molded parts is advantageously carried out at an NCO/OH ratio of 0.85 to 1.20, wherein the heated starting components are mixed and brought in a quantity corresponding to the desired molded part density into a heated, preferably tightly closing molding tool. The molded parts are cured for 5 minutes to 60 minutes and then can be removed from the mold. The quantity of the reaction mixture introduced into the molding tool is customarily dimensioned in such a manner that the molded bodies obtained have the density already presented. The starting components are customarily introduced into the molding tool at a temperature of 15°C to 120°C, preferably of 30°C to 110°C. The degrees of compression for producing the molded bodies lie between 1.1 and 8, preferably between 2 and 6. The cellular polyisocyanate polyaddition products are expediently produced according to the "one shot" method with the aid of high pressure technology, low pressure technology or in particular reaction injection molding technology (RIM) in open or preferably closed molding tools. The reaction is carried out in particular by compression in a closed molding tool. The reaction injection molding technology is described, for example, by H. Piechota and H. Röhr in "Integralschaumstoffe", Carl Hanser-Verlag, Munich, Vienna 1975; D.J. Prepelka and J.L. Wharton in Journal of Cellular Plastics, March/April 1975, pages 87 to 98 and U. Knipp in Journal of Cellular Plastics, March/April 1973, pages 76-84.

Preferably, the radial damper encloses the core element axially and radially at least partially, wherein the core element comprises a first axial height and the radial damper comprises a second axial height, and wherein the second axial height exceeds the first axial height.

According to yet another preferred embodiment, said radial damper comprises a first axial end face and a second axial end face, the second axial end face being opposite from the first end face and wherein said radial damper comprises a plurality of axial protrusions extending form the first end face and/or the second end face. These axial protrusions are utilized as an alternative to the axial damping elements to provide the axial damping functionality.

Preferably, said protrusions are arranged on a radius coaxial to the longitudinal axis. In this way, the inlay can be conveniently inserted into the housing. According to a preferred embodiment, said protrusions are uniformly distributed over the radius. Preferably, said protrusions form a wavy ridge in the circumferential direction around the longitudinal axis. Said waves have been found to be beneficial to improve the compression properties of the damper inlay. By adjusting the number and geometry of the protrusions, the axial damping properties of the damper inlay may be influenced.

According to yet another preferred embodiment, said protrusions extend axially starting from a base being adjacent to the core towards a tip being remote from the core, wherein the protrusions taper from base to tip. In this way, the axial damping properties of the damper inlay are improved.

According to yet another preferred embodiment, the core element comprises a first section radially surrounding the through hole and a second section radially surrounding the first section, wherein the first section comprises a constant axial thickness and the second section comprises a decreasing axial thickness, wherein the thickness decreases with increasing radial distance from the longitudinal axis. This design of the core element in combination with the radial damper has been found to be beneficial to further improve the radial and axial damping properties of the damper inlay.

According to a preferred embodiment, the core element is made of at least one of the following materials: steel, aluminium, resp. alloys, plurality segments of diff. materials, inter alia hard plastics e.g. gfrp (polyamide matrix) .

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

This invention will now be described with reference to the accompanying drawings which illustrate, by way of example and not by way of limitation, one of several possible embodiments of damper inlays as proposed herein, and wherein:
Fig. 1 to 6 shows a first embodiment of a damper inlay according to the invention in different views;
Fig. 7 and 8: show the damper inlay according to figs. 1 to 6 inserted into a damper housing forming a damper unit;
Fig. 9 to 13: show an alternative embodiment of a damper inlay according to the invention in different views;
Fig. 14 and 15: show the damper inlay according to figs. 9 to 13 inserted into a damper housing forming a damper unit;

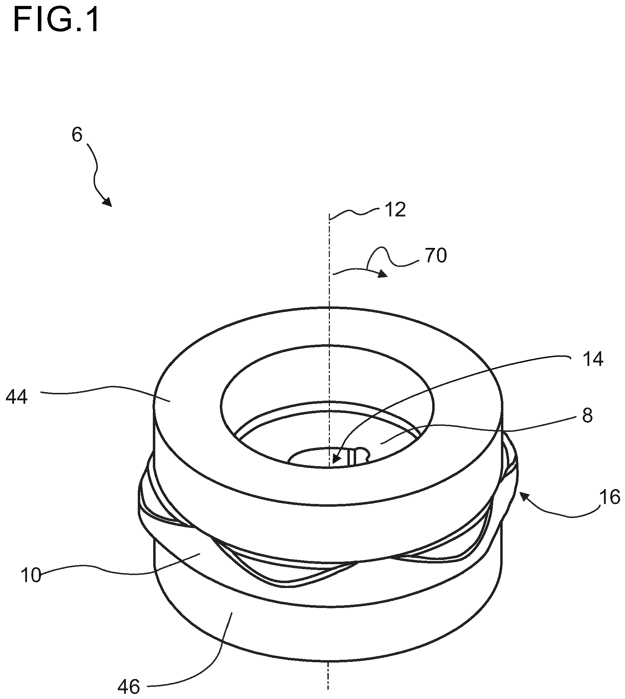

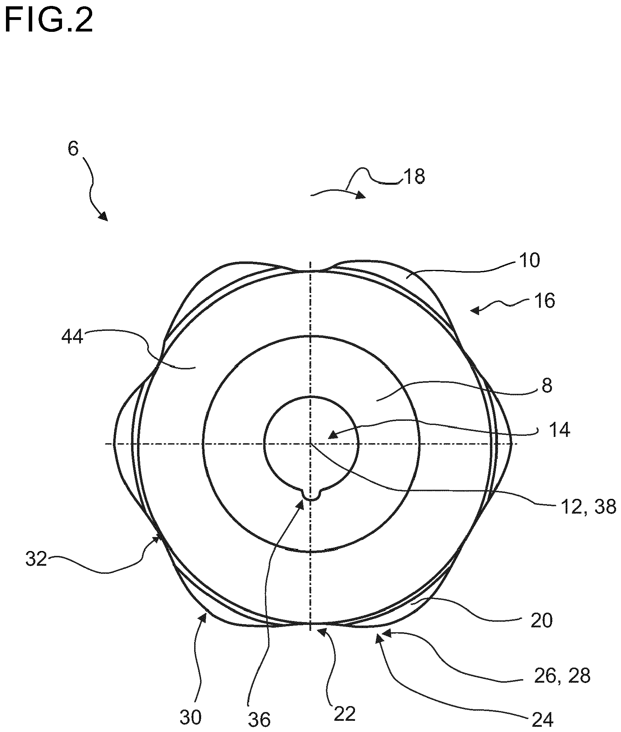

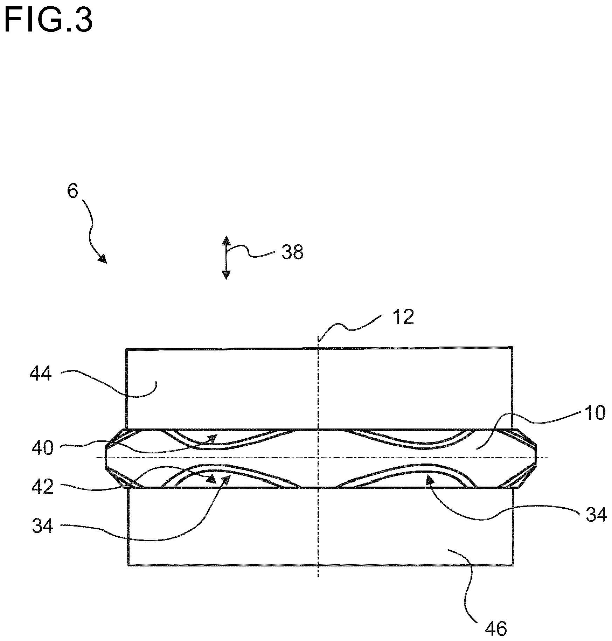

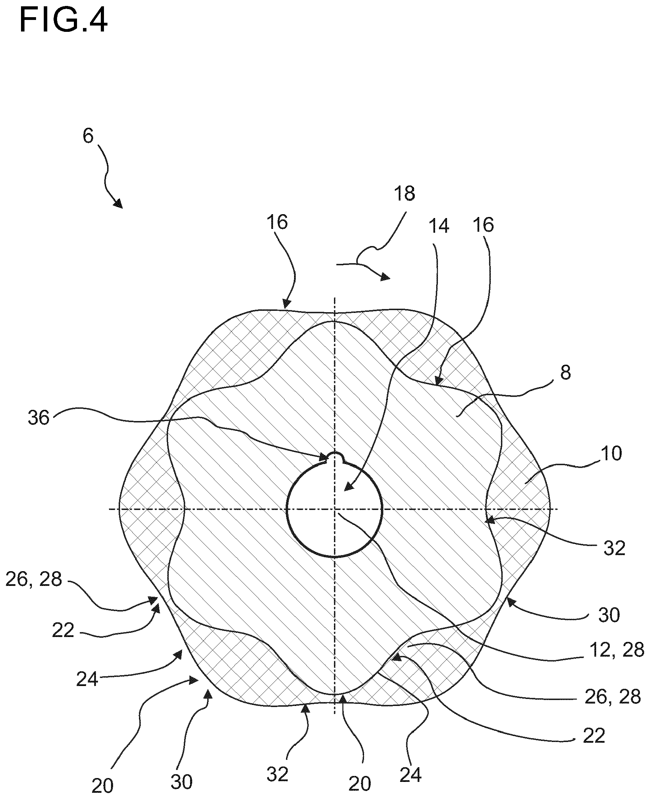

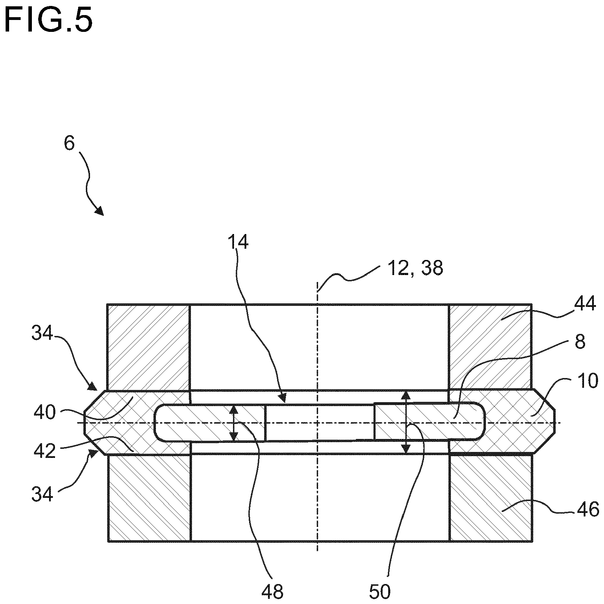

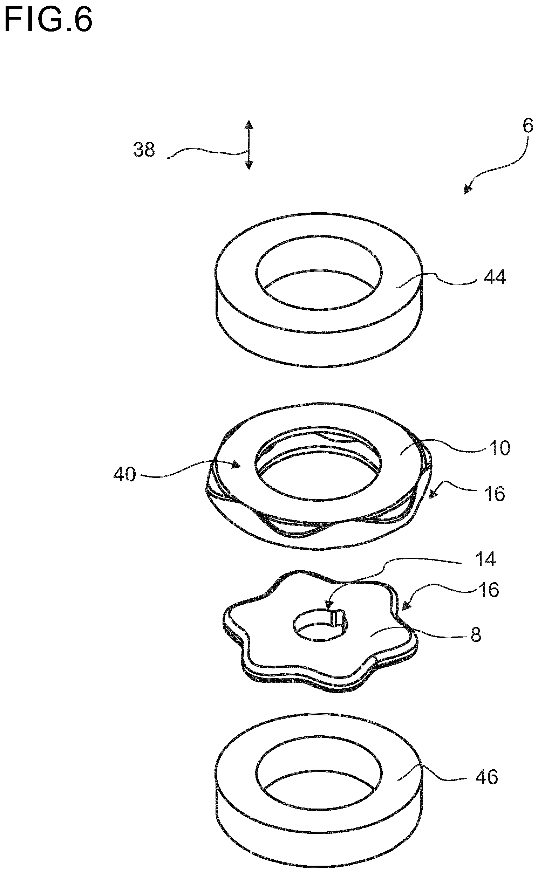

Figs. 1 to 6 show a first embodiment of a damper inlay 6. The damper inlay 6 is a hybrid top mount inlay 6 for a vehicle. The damper inlay 6 comprises a core element 8. The damper inlay 6 moreover comprises a radial damper 10. The radial damper 10 is configured for damping radial loads perpendicular to a longitudinal axis 12 of the damper inlay 6. The radial damper 10 radially surrounds the core element 8. The core element 8 and the radial damper 10 comprise a centrally arranged through hole 14. The through hole extends along a longitudinal axis 12 of the damper inlay 6. The core element 8 and the radial damper 10 comprise a variable radial thickness 16 in a circumferential direction 18 around the longitudinal axis 12. The variable radial thickness 16 is incorporated by sections of higher radial thickness 20 that alternate with sections of lower radial thickness 22 in the circumferential direction 18. Between the sections of higher radial thickness 20 and lower radial thickness 22, thickness transition sections 24 are arranged. The thickness transition sections 24 provide a bent-free and steady thickness transition 26, 28, so that that no abrupt changes in thickness take place at the thickness transition sections 26, 28.

The sections of higher radial thickness 20 comprise a convex outer contour 30. The sections of lower radial thickness 22 comprise a concave outer contour 32. The sections of the core element 8 having a higher radial thickness 20 correspond to sections of the radial damper 10 having a lower radial thickness. The sections of the core element 8 having a lower radial thickness 22 correspond to sections of the radial damper 10 having a higher radial thickness 20. An axial thickness 34 of the sections of higher radial thickness tapers with increasing radial distance 70 from the longitudinal axis 12.

The radial damper 10 is mouldered around the core element 8. Furthermore, the radial damper 10 is preferably made of compact polyurethane, in particular thermoplastic polyurethane (TPU), or rubber. The centrally arranged through hole 14 comprises a groove 36 extending along the axial direction 38. The radial damper 10 comprises a first axial end face 40 and a second axial end face 42. The second axial end face 42 is opposite from the first axial end face 40. The damper inlay 6 furthermore comprises a first and second axial damping element 44, 46 for damping axial loads. The first axial damping element 44 is in contact with the first axial end face 40. The second axial damping element 46 is in contact with the second axial end face 42. Furthermore, the radial damper 10 encloses a core element 8 axially and radially at least partially. The core element 8 comprises a first axial height 48. The radial damper 10 comprises a second axial height 50. The second axial height 50 exceeds the first actual height 48.

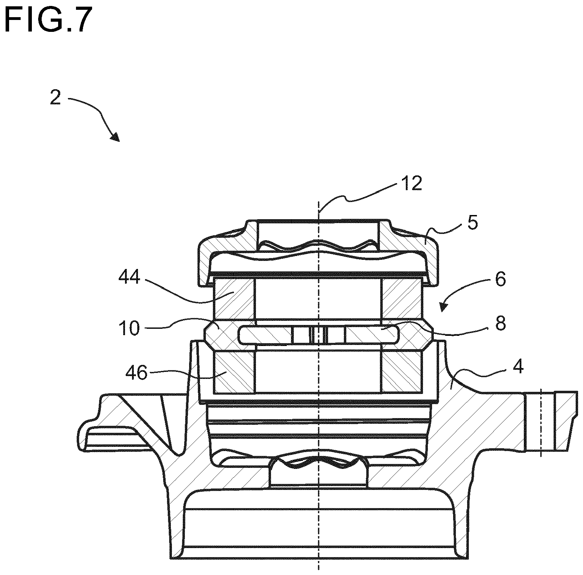

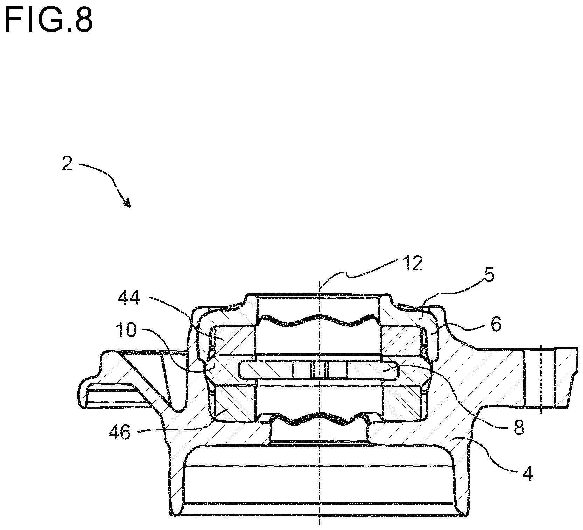

Figs. 7 and 8 show a damper unit 2. The damper unit 2 comprises a damper housing 4 for accommodating a damper inlay 6. The damper unit 2 moreover comprises at least one damper inlay 6 inserted into said housing 4. With regard to details regarding the damper inlay 6, reference is made to figs. 1 to 6. In fig. 7, the damper unit 2 is shown in a non-compressed state, wherein in fig. 8, the damper unit 2 is shown in a compressed state.

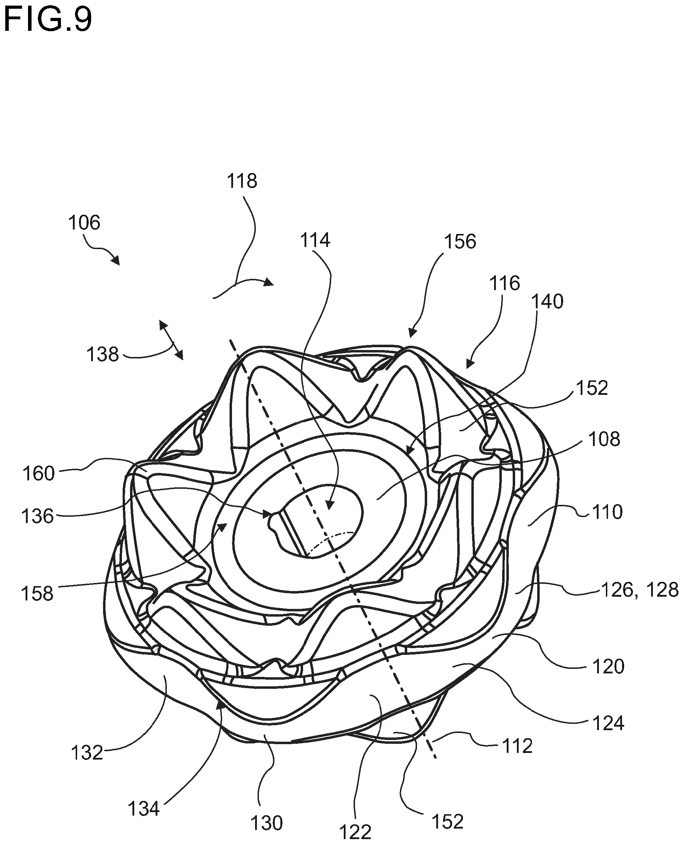

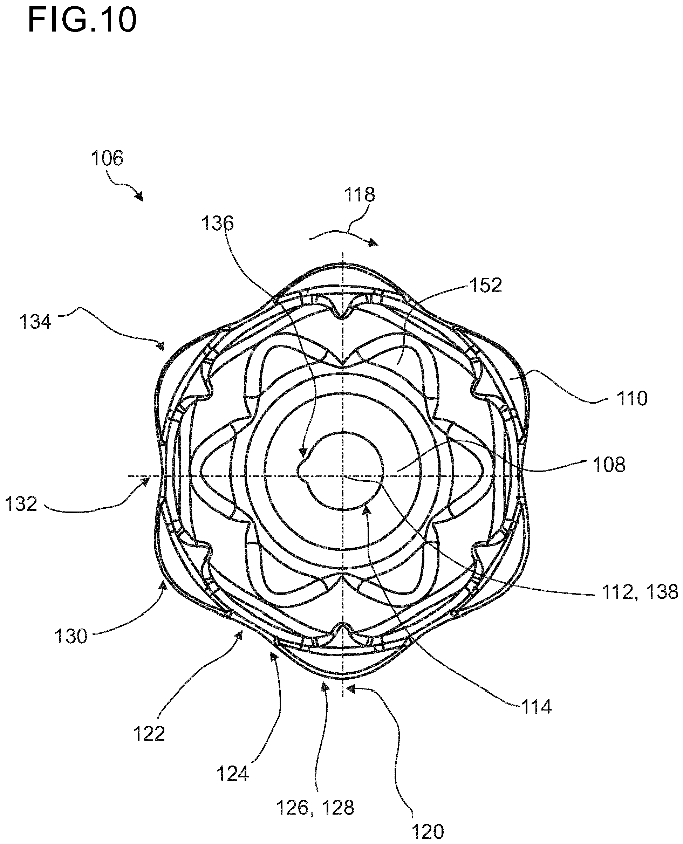

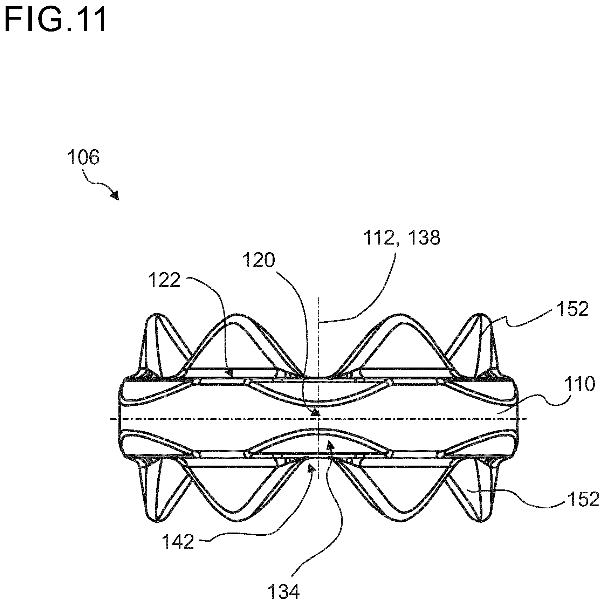

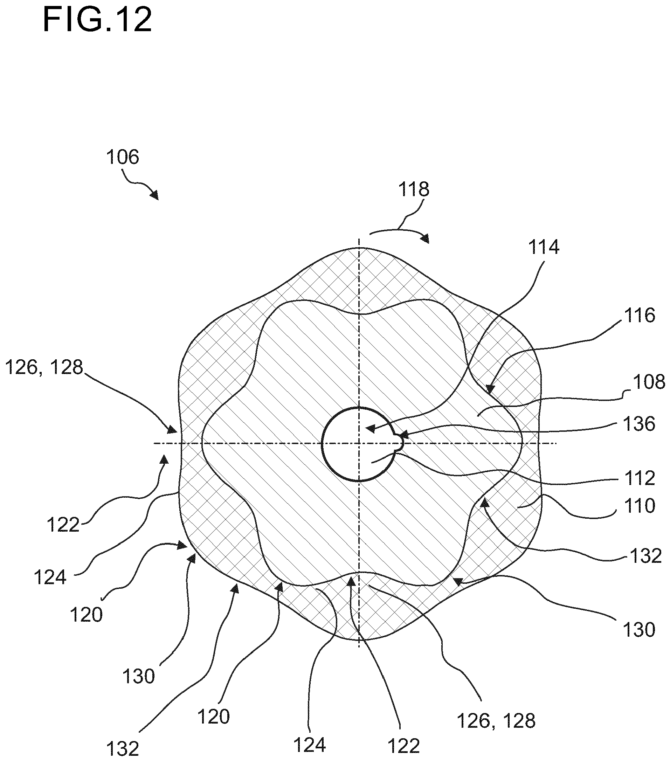

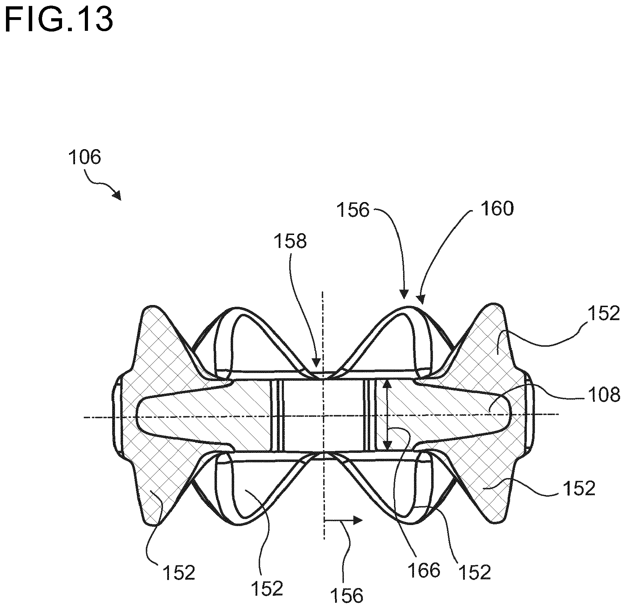

Fig. 9 to 13 show an alternative embodiment of a damper inlay 106. The damper inlay 106 comprises a core element 108. The damper inlay 106 moreover comprises a radial damper 110. The radial damper 110 is configured for damping radial loads perpendicular to a longitudinal axis 112 of the damper inlay 106. The radial damper 110 radially surrounds the core element 108. The core element 108 and the radial damper 110 comprise a centrally arranged through hole 114. The through hole extends along the longitudinal axis 112 of the damper inlay 106. The core element 108 and the radial damper 110 comprise a radial thickness 116 in a circumferential direction 118 around the longitudinal axis 112.

The variable radial thickness 116 comprises sections of higher radial thickness 120 that alternate with sections of lower radial thickness 122 in the circumferential direction. The damper inlay 106 moreover comprises thickness transition sections 124 that are arranged between the sections of higher radial thickness 120 and lower radial thickness 122. The thickness transition sections 124 provide a bent-free and steady thickness transition 126, 128. The sections of higher radial thickness 120 comprise a convex outer contour 130. The sections of lower radial thickness 122 comprise a concave outer contour 132.

The sections of the core element 108 having a higher radial thickness 120 correspond to sections of the radial damper 110 having a lower radial thickness 122. The sections of the core element 108 having a lower radial thickness 122 correspond to sections of the radial damper 110 having a higher radial thickness 120. An axial thickness 134 of the sections of higher radial thickness 120 tappers with increasing radial distance 170 from the longitudinal axis 112. The radial damper 110 is moulded around the core element 108. The radial damper 110 is made of compact polyurethane, in particular of two-component polyurethane and/or thermo-plastic polyurethane (TPU). Furthermore, the centrally arranged through hole 114 comprises a groove 136 extending along the axial direction 138. The radial damper 110 comprises a first axial end face 140 and a second axial end face 142. The second axial end face 142 is opposite from the first end face 140.

The radial damper 110 comprises a plurality of axial protrusions 152 extending from the first end face 140 and/or the second end face 142. The protrusions 152 are arranged on a radius coaxial to the longitudinal axis 154. The protrusions 152 are uniformly distributed over the radius. The protrusions 152 form a wavy ridge in the circumferential direction 118 around the longitudinal axis 112. The protrusions 152 extend axially starting from a base 158 being adjacent to the core 108 towards a tip 160 being remote from the core 108. The protrusions 152 taper from base 158 to tip 160. The core element 108 comprises a first section 162 radially surrounding the through hole 114. The core element 108 furthermore comprises a second section 164 radially surrounding the first section 162. The first section 162 comprises a constant axial thickness 166 and the second section 164 comprises a decreasing actual thickness 168. The thickness decreases with increasing radial distance 170 from the longitudinal axis 112.

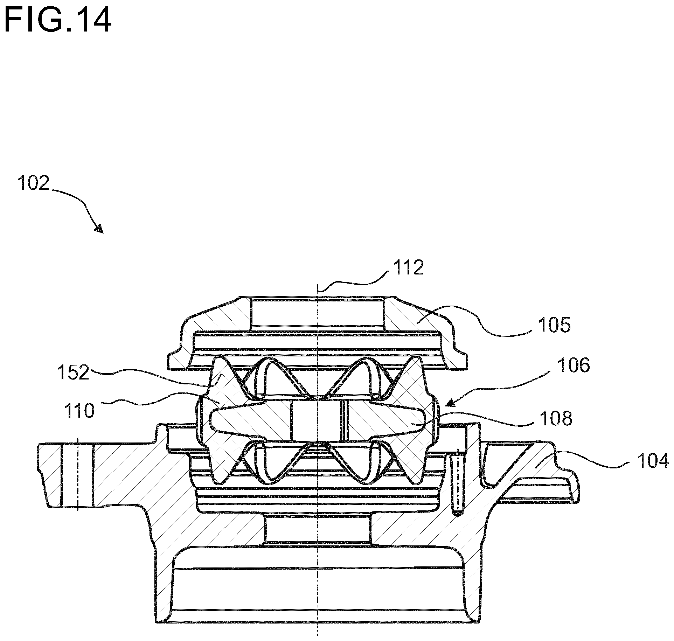

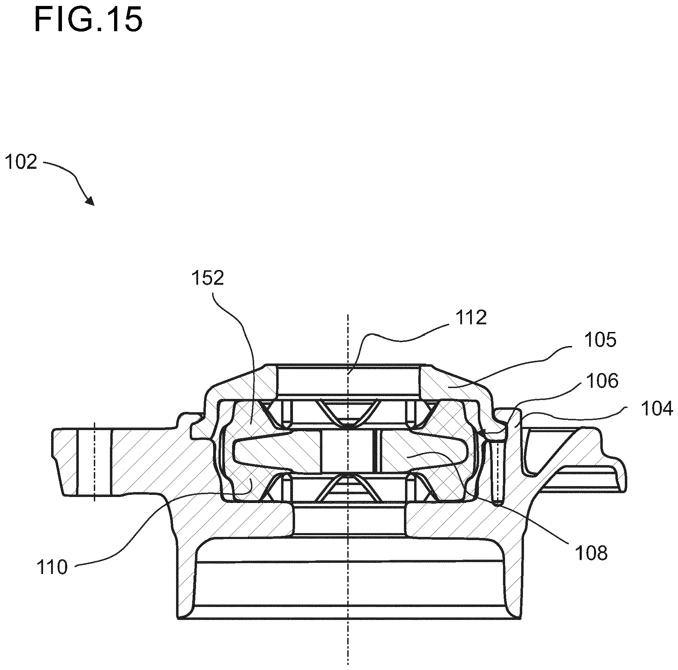

Figs. 14 and 15 show a damper unit 102. The damper unit 102 comprises the damper inlay 106 and a damper housing 104 for accommodating said damper inlay 106. The damper housing 104 moreover comprises a damper couple 105. In fig. 14, the damper unit 102 is shown in a non-compressed state, wherein in fig. 15, the damper unit 102 is shown in a compressed state.

### List of references

- 2: damper unit
- 4: damper housing
- 5: damper cover
- 6: damper inlay
- 8: core element
- 10: radial damper
- 12: longitudinal axis
- 14: centrally arranged through hole
- 16: variable radial thickness
- 18: circumferential direction
- 20: sections of higher radial thickness
- 22: sections of lower radial thickness
- 24: thickness transition section
- 26: bend-free thickness transition
- 28: steady thickness transition
- 30: convex outer contour
- 32: concave outer contour
- 34: tapering axial thicknesses
- 36: groove
- 38: axial direction
- 40: first axial end face
- 42: second axial end face
- 44: first axial damping element
- 46: second axial damping element
- 48: first axial height of core element
- 50: second axial height of radial damper
- 70: radial distance
- 102: damper unit
- 104: damper housing
- 105: damper cover
- 106: damper inlay
- 108: core element
- 110: radial damper
- 112: longitudinal axis
- 114: centrally arranged through hole
- 116: variable radial thickness
- 118: circumferential direction
- 120: sections of higher radial thickness
- 122: sections of lower radial thickness
- 124: thickness transition section
- 126: bend-free thickness transition
- 128: steady thickness transition
- 130: convex outer contour
- 132: concave outer contour
- 134: tapering axial thicknesses
- 136: groove
- 138: axial direction
- 140: first axial end face
- 142: second axial end face
- 152: axial protrusions
- 156: wavy ridge
- 158: base
- 160: tip
- 162: first section of core element
- 164: second section of core element
- 166: axial thickness
- 170: radial distance

## Claims

1. A damper inlay (6, 106), in particular a hybrid top mount inlay (6, 106) for a vehicle, in particular a commercial vehicle, said damper inlay (6, 106) comprising:
a core element (8, 108),
a radial damper (10, 110) for damping radial loads perpendicular to a longitudinal axis (12, 112) of the damper inlay (6, 106), said radial damper (10, 110) radially surrounding the core element (8, 108),
wherein the core element (8, 108) and the radial damper (10, 110) comprise a centrally arranged through hole (14, 114), the through hole extending along the longitudinal axis (12, 112) of the damper inlay (6, 106),
**characterized in that** at least one of the core element (8, 108) or the radial damper (10, 110) comprise a variable radial thickness (16, 116) in a circumferential direction (18, 118) around the longitudinal axis (12, 112).

2. The damper inlay (6, 106) according to claim 1,
wherein sections of higher radial thickness (20, 120) alternate with sections of lower radial thickness (22, 122) in the circumferential direction (18, 118).

3. The damper inlay (6, 106) according to claim 2,
comprising thickness transition sections (24, 124) between the sections of higher radial thickness (20, 120) and lower radial thickness (22, 122).

4. The damper inlay (6 ,106) according to claim 3,
wherein the thickness transition sections (24, 124) provide a bend-free thickness transition (26, 126).

5. The damper inlay (6, 106) according to any of the preceding claims,
wherein the sections of higher radial thickness (20, 120) comprise a convex outer contour (30, 130) and/or wherein the sections of lower radial thickness (22, 122) comprise a concave outer contour (32, 132).

6. The damper inlay (6, 106) according to according to any of the preceding claims,
wherein the core element (8, 108) and the radial damper (10, 110) comprise the variable radial thickness (16, 116) in the circumferential direction (18, 118) around the longitudinal axis (12, 112),
and wherein sections of the core element (8, 108) having a higher radial thickness (20, 120) correspond to sections of the radial damper (10, 110) having a lower radial thickness (22, 122), in particular wherein sections of the core element (8, 108) having a lower radial thickness correspond (22, 122) to sections of the radial damper (10, 110) having a higher radial thickness (20, 120).

7. The damper inlay (6, 106) according to any of the preceding claims,
wherein an axial thicknesses (34, 134) of the sections of higher radial thickness (20, 120) tapers with increasing radial distance (70, 170) from the longitudinal axis (12, 112).

8. The damper inlay (6, 106) according to any of the preceding claims,
**characterized in that** the radial damper (10, 110) is made of polyurethane, in particular thermoplastic polyurethane (TPU), or rubber.

9. The damper inlay (6) according to any of the preceding claims,
wherein said radial damper (10) comprises a first axial end face (40) and a second axial end face (42), the second axial end face (42) being opposite from the first end face (40) and
a first and a second axial damping element (44, 46) for damping axial loads, the first axial damping element (44) being in contact with the first axial end face (40) and the second axial damping element (46) being in contact with the second axial end face (42).

10. The damper inlay (6) according to claim 9,
**characterized in that** at least one of the first axial damping element (44) and the second axial damping element (46) comprises or consists of microcellular polyurethane, in particular volume compressible microcellular polyurethane.

11. The damper inlay (6) according to any of the preceding claims,
wherein the radial damper (10) encloses the core element (8) axially and radially at least partially, and wherein the core element (8) comprises a first axial height (48) and the radial damper (10) comprises a second axial height (50) and wherein the second axial height (50) exceeds the first axial height (48).

12. The damper inlay (106) according to one of claims 1 - 8,
wherein said radial damper (110) comprises a first axial end face (140) and a second axial end face (142), the second axial end face (142) being opposite from the first end face (140) and
wherein said radial damper (110) comprises a plurality of axial protrusions (152) extending from the first end face (140) and/or the second end face (142).

13. The damper inlay (106) according to claim 12,
wherein said protrusions (152) are arranged on a radius coaxial to the longitudinal axis (154) and/or wherein said protrusions (152) are uniformly distributed over the radius and/or form a wavy ridge (156) in the circumferential direction (118) around the longitudinal axis (112).

14. The damper inlay (106) according to one of claims 12 or 13,
wherein the core element (108) comprises a first section (162) radially surrounding the through hole (114) and a second section (164) radially surrounding the first section (162), wherein the first section (162) comprises a constant axial thickness (166) and the second section (164) comprises a decreasing axial thickness (168), wherein the thickness decreases with increasing radial distance (170) from the longitudinal axis (112).

15. A damper unit (2, 102) for a vehicle, comprising
a damper housing (4, 104) for accommodating a damper inlay (6, 106), and
at least one damper inlay (6, 106),
**characterized in that** the damper inlay (6, 106) is designed according to at least one of the previous claims.
